# EUROPÄISCHE PATENTSCHRIFT

(11) **EP 1 813 006 B1**
(45) Veröffentlichungstag und Bekanntmachung des Hinweises auf die Patenterteilung: **27.07.2011**
(21) Anmeldenummer: 05797489.1
(22) Anmeldetag: 14.10.2005
(51) Int. Cl.: H02G 11/00, F16G 13/16

(54) **TRAGWAGEN FÜR EINE ENERGIEFÜHRUNGSEINHEIT SOWIE ENERGIEFÜHRUNGSVORRICHTUNG**
SUPPORTING CARRIAGE FOR A POWER CONDUCTING DEVICE, AND POWER CONDUCTING DEVICE
CHARIOT PORTEUR POUR UNITE DE GUIDAGE D'ELEMENTS DE TRANSPORT D'ENERGIE ET SYSTEME DE GUIDAGE D'ELEMENTS DE TRANSPORT D'ENERGIE

(30) Priorität: 15.10.2004 DE 102004050148
(43) Veröffentlichungstag der Anmeldung: 01.08.2007
(73) Patentinhaber: Kabelschlepp GmbH, 57482 Wenden-Gerlingen (DE)
(72) Erfinder: WEHLER, Herbert, 57290 Neunkirchen (DE)
(74) Vertreter: Neumann, Ditmar
(86) Internationale Anmeldenummer: PCT/EP2005/011078
(87) Internationale Veröffentlichungsnummer: WO 2006/042707

(56) Entgegenhaltungen:
- EP-A- 0 725 228
- EP-A- 1 193 420
- WO-A-03/060346
- DE-B- 1 098 563
- DE-C- 874 209
- US-A- 4 325 521
- US-A- 4 462 565
- US-A- 5 692 984
- PATENT ABSTRACTS OF JAPAN Bd. 1998, Nr. 13, 30. November 1998 (1998-11-30) -& JP 10 220533 A (FUJI ENG KK), 21. August 1998 (1998-08-21)
- PATENT ABSTRACTS OF JAPAN Bd. 003, Nr. 053 (M-058), 8. Mai 1979 (1979-05-08) -& JP 54 029491 A (TSUBAKIMOTO CHAIN CO), 5. März 1979 (1979-03-05)

## Beschreibung

Der Gegenstand der Erfindung bezieht sich auf einen Tragwagen für eine Energieführungseinheit, der zwischen einem Obertrum und einem Untertrum der Energieführungseinheit anordenbar ist sowie auf eine Energieführungsvorrichtung umfassend wenigstens eine Energieführungskette und einen zwischen einem Obertrum und einem Untertrum der Energieführungskette angeordneten Tragwagen.

Energieführungsketten werden in unterschiedlichen Apparaten, Maschinen und Einrichtungen eingesetzt, insbesondere dort, wo es erforderlich ist, Verbrauchsmittel wie beispielsweise Energie, Wasser, Luft sowie Energie in Form von Strom mittels Leitungen, Schläuchen oder dergleichen von einem ortsfesten Anschluss zu einem beweglichen Anschluss eines Verbrauchers zu transportieren. Eine Energieführungskette kann einen Strang oder mehrere Stränge aufweisen, in denen die Leitungen, Schläuche oder dergleichen geführt werden.

Bei sehr langen Verfahrwegen besteht die Problematik, dass aufgrund des Eigengewichts der Energieführungskette sowie des Gewichts der Leitungen und Schläuche die Energieführungskette bzw. die Kettenglieder einer hohen Beanspruchung unterliegen. Dies ist insbesondere dann der Fall, wenn ein Obertrum einer Energieführungskette auf einem Untertrum aufliegt, so dass durch die Bewegung zwischen dem Obertrum und dem Untertrum hohe Reibungskräfte entstehen, die einerseits zu einer Abnutzung der Glieder und andererseits zu einem Bewegungswiderstand führen, wobei sich zur Bewegung der Energieführungskette notwendige Kraft bzw. Energie erhöht und die Gefahr besteht, einen Bruch der Kette oder ihrer Bewegungspunkte hervorzurufen. Insbesondere bei sehr langen Verfahrwegen einer Energieführungskette unterliegen die gelenkigen Verbindungen der Glieder der Energieführungskette hohen Zug- bzw. Druckkräften.

Zur Minimierung der Reibungskräfte zwischen einem Obertrum und einem Untertrum ist es bekannt, dass dies durch einen so genannten Gleitschuh erreicht wird. Gleitschuhe werden an wenigstens einigen Gliedern der Energieführungskette angeordnet, wodurch der Reibungswiderstand zwischen den aneinander reibenden Bereichen der Trumme verringert werden kann.

Aus der DE 874 209 C ist eine Kabelzuführung mit einer Umlenkrolle bekannt. Aus der JP 10 220533 A ist ein Tragwagen bekannt, der oben und unten an einem Stützkörper angebrachte Räder aufweist.

Aus der EP 0 725 228 A1 ist bekannt, dass zwischen einem Obertrum und einem Untertrum einer Energieführungskette ein Tragwagen angeordnet wird. Der Tragwagen weist Räder oder dergleichen auf, die dazu geeignet sind, gleichseitig auf der Oberseite des Untertrums und auf der Unterseite des Obertrums zu rollen. Für eine synchrone Bewegung des Tragwagens mit dem beweglichen Ende der Energieführungskette weist der Tragwagen an seinen gegenüberliegenden Enden jeweils eine Seilscheibe auf. Der bewegliche Anschluss, der mit dem beweglichen Ende der Energieführungskette verbunden ist, ist mit einem Seilpaar verbunden. Das eine Seil wird über die eine Seilscheibe an einem Ende und das andere Seil über eine weitere Seilscheibe am gegenüberliegenden Ende des Tragwagens geführt. Die Enden der Seile sind am ortsfesten Anschluss der Energieführungskette festgelegt. Mit der Bewegung des beweglichen Anschlusses wird der Tragwagen durch das eine oder durch das andere Seil bewegt.

Problematisch bei einer solchen Anordnung ist, dass aufgrund der Seildehnung eine synchrone Bewegung nicht zuverlässig erreicht werden kann. Darüber hinaus besteht die Gefahr, dass das Seil aus den Seilscheiben springen kann, was zu einer Zerstörung der Kabelführungsvorrichtung führen kann.

Durch die WO 03/060346 ist eine Energieführungsvorrichtung bekannt, die wenigstens eine aus Gliedern zusammengesetzte Energieführungskette aufweist. Die

Energieführungskette ist durch untereinander um senkrechte Achsen zur Längsrichtung der Energieführungskette angelenkte Glieder gebildet. Ein erstes Ende der Energieführungskette ist ortsfest befestigt, während das zweite Ende der Energieführungskette in Längsrichtung dieser bewegbar ist. Zwischen dem Obertrum und dem Untertrum der Energieführungskette ist ein Tragwagen angeordnet.

Dieser Tragwagen steht in einer Wirkverbindung mit dem Obertrum, so dass während des Bestehens dieser Wirkverbindung der Tragwagen lediglich durch den Obertrum mit bewegt wird. Hierdurch wird eine erhöhte Betriebssicherheit erreicht, da ein passiver Antrieb des Tragwagens erfolgt. Der konstruktive Aufwand sowie der Montageaufwand einer solchen. Energieführungsvorrichtung sind auf ein sehr geringes Maß reduziert. Der Tragwagen weist eine Rückholeinrichtung auf, durch die sichergestellt werden soll, dass der Tragwagen auch dann in eine Bewegung versetzt wird, wenn zwischen dem Obertrum und dem Tragwagen keine oder nur eine sehr geringe Reibung besteht, die nicht hinreichend groß ist, damit der Tragwagen durch den Obertrum mitgenommen wird.

Hiervon ausgehend liegt der vorliegenden Erfindung die Aufgabe zugrunde, einen Tragwagen so weiterzubilden, dass dieser stets mitgenommen wird.

Diese Aufgabe wird erfindungsgemäß durch einen Tragwagen mit den Merkmalen des Anspruchs 1 gelöst. Vorteilhafte Weiterbildungen und Ausgestaltungen des Tragwagens sind Gegenstand der abhängigen Ansprüche.

Der Tragwagen für eine Energieführungseinheit wird zwischen einem Obertrum und einem Untertrum der Energieführungseinheit angeordnet. Er ist mit dieser beweglich. Der Tragwagen weist einen Grundkörper auf, der mit einer Rückhohleinrichtung verbunden ist. Die Rückholeinrichtung ist so ausgebildet, dass diese wenigstens teilweise durch mindestens einen gekrümmten Führungskanal gebildet ist. Durch diese erfindungsgemäße Ausgestaltung des Tragwagens wird erreicht, dass die Mitnahme im Krümmungsradiusbereich der Energieführungseinheit erfolgt. Hierdurch wird stets sichergestellt, dass eine effektive Mitnahme des Tragwagens erreicht wird. Ein weiterer Vorteil der erfindungsgemäßen Ausgestaltung des Tragwagens ist, dass durch den wenigstens einen Führungskanal eine Zentrierung der Energieführungseinheit auf dem Tragwagen erreicht wird. Dies ist insbesondere dann von Vorteil, wenn sehr große Verfahrwege realisiert werden. Die Energieführungseinheit kann aus einzelnen Gliedern aufgebaut werden. Innerhalb des Krümmungsbereiches der Energieführungseinheit entsteht ein Polygoneffekt. Durch die gekrümmte Ausbildung des Führungskanals wird erreicht, dass dieser Polygoneffekt keinen negativen Einfluss auf die Mitnahme des Tragwagens hat. Darüber hinaus kann der Führungskanal den Krümmungsradius bzw. den Krümmungsbereich definieren, so dass ein verbesserter Ablauf der Bewegung der Energieführungseinheit erreicht wird. Dies ist insbesondere bei Energieführungseinheiten von Bedeutung, die mit großen Leitungsgewichten belastet sind.

Der gekrümmt ausgebildete Führungskanal weist einen inneren und einen äußeren Krümmungsabschnitt auf. Die Krümmungsabschnitte sind bevorzugt konzentrisch zueinander ausgebildet. Sie können aus Blechteilen und/oder aus Kunststoff hergestellt sein. Gemäß einer bevorzugten Ausgestaltung des Tragwagens wird vorgeschlagen, dass der wenigstens eine Führungskanal durch einen inneren und durch wenigstens zwei äußere zueinander beabstandete Krümmungsabschnitte gebildet ist. Der Vorteil einer solchen Ausgestaltung des Führungskanals kann darin gesehen werden, dass die Energieführungseinheit auf dem inneren Krümmungsabschnitt aufliegt, während die zwei äußeren Krümmungsabschnitte, die zueinander beabstandet angeordnet sind, eine Führung der Energieführungseinheit ermöglichen.

Gemäß einer noch weiteren vorteilhaften Ausgestaltung des Tragwagens wird vorgeschlagen, dass der innere Krümmungsabschnitt einen Mittelpunktswinkel aufweist, der größer ist als ein Mittelpunktswinkel des äußeren Krümmungsabschnittes. Bevorzugt ist dabei eine Ausgestaltung, bei der der Mittelpunktswinkel des inneren Krümmungsabschnittes größer als 180 Grad ist.

Zur Verringerung der Reibungskräfte innerhalb des Führungskanals wird nach einer noch weiteren vorteilhaften Ausgestaltung des Tragwagens vorgeschlagen, dass der mindestens eine Führungskanal wenigstens teilweise für Gleitreibung ausgebildet ist. Die gleitende Ausgestaltung des Führungskanals kann dadurch erreicht werden, dass die Krümmungsabschnitte bzw. der innere Krümmungsabschnitt aus einem Werkstoff besteht, dessen Reibungskoeffizient gering ist. Es besteht auch die Möglichkeit, die Gleitschicht durch eine Einlage auszubilden, die insbesondere mit dem inneren Krümmungsabschnitt lösbar verbunden ist, so dass diese Einlage ein Verschleißteil bildet, welches relativ einfach ausgetauscht werden kann, wenn dies verschleißbedingt notwendig ist.

Die Krümmungsabschnitte können aus unterschiedlichen Werkstoffen oder Materialien ausgebildet sein. Bevorzugt ist dabei eine Ausgestaltung, bei der wenigstens ein Krümmungsabschnitt wenigstens teilweise aus Metall gebildet ist. Bevorzugt ist dabei eine Ausbildung, bei der der Krümmungsabschnitt aus einem Blech gebogen wird.

Der vorliegenden Erfindung liegt auch die Aufgabe zugrunde, eine Energieführungsvorrichtung anzugeben, die besonders für lange Verfahrwege geeignet ist. Diese Aufgabe wird erfindungsgemäß durch eine Energieführungsvorrichtung mit den Merkmalen des Anspruchs 10 gelöst. Vorteilhafte Ausbildungen und Ausgestaltungen der Energieführungsvorrichtung sind Gegenstand der abhängigen Ansprüche.

Die erfindungsgemäße Energieführungsvorrichtung weist wenigstens eine aus Gliedern zusammengesetzte Energieführungseinheit auf, wobei ein erstes Ende der Energieführungseinheit ortsfest befestigbar und das zweite Ende wenigstens in Längsrichtung bewegbar sind. Die Energieführungseinheit bildet einen Obertrum sowie einen Untertrum unter Ausbildung eines Krümmungsbereichs. Zwischen dem Obertrum und dem Untertrum ist ein hin- und her beweglicher Tragwagen angeordnet, wobei dieser einen Grundkörper aufweist, der mit einer Rückholeinrichtung ausgestattet ist. Die Rückholeinrichtung weist wenigstens einen gekrümmten Führungskanal auf, so dass die Energieführungseinheit im Krümmungsbereich geführt wird. Diese erfindungsgemäße Ausgestaltung der Energieführungsvorrichtung ist insbesondere für lange Verfahrwege geeignet. Durch die Anwesenheit des Tragwagens werden die auf die Energieführungseinheit wirkenden Kräfte verringert, so dass die Belastung der Energieführungseinheit kleiner ist als bei herkömmlichen Energieführungseinheiten. Dadurch, dass die Energieführungseinheit im Krümmungsbereich geführt wird, wird auch erreicht, dass eine Zentrierung der Energieführungseinheit auf dem Tragwagen erreicht wird. Insbesondere bei hohen Beschleunigungen der Energieführungseinheit und bei großen Verfahrgeschwindigkeiten tritt zwischen der Energieführungseinheit und dem Tragwagen im Wesentlichen kein Schlupf auf.

Der Tragwagen der erfindungsgemäßen Energieführungsvorrichtung ist bevorzugt entsprechend den Ansprüchen 2 bis 9 ausgebildet.

Gemäß einer noch weiteren vorteilhaften Ausgestaltung der Energieführungsvorrichtung wird vorgeschlagen, dass wenigstens einige Glieder der Energieführungskette Mittel aufweisen, die in wenigstens einen Führungskanal eingreifen. Bei den Mitteln kann es sich um ketteneinwärts gerichtete Vorsprünge oder desgleichen handeln. Zusätzlich oder anstelle von Vorsprüngen kann die Energieführungseinheit Rollen aufweisen, die in Kontakt mit dem Führungskanal gelangen.

Die Erfindung hat noch weitere zahlreiche Vorteile. Insbesondere wird die Belastung der Energieführungseinheit sowie der in der Energieführungseinheit geführten Kabel, Leitungen oder dergleichen reduziert. Darüber hinaus wird ein Aufbäumen der Energieführungskette während der Bewegung der Energieführungseinheit vermieden.

Weitere Einzelheiten der Erfindung werden anhand der in der Zeichnung dargestellten Ausführungsbeispiele erläutert, ohne dass der Gegenstand der Erfindung auf diese konkreten Ausführungsbeispiele beschränkt wird.

Es zeigen:
- Fig. 1: ein erstes Ausführungsbeispiel einer Energieführungsvorrichtung in einer ersten Endstellung,
- Fig. 2: die Energieführungsvorrichtung nach Fig. 1 in einer zweiten Endstellung,
- Fig. 3: schematisch und perspektivisch einen äußeren Krümmungsabschnitt eines Führungskanals,
- Fig. 4: ein zweites Ausführungsbeispiel einer Energieführungsvorrichtung in einer ersten Endstellung,
- Fig. 5: die Energieführungsvorrichtung nach Fig. 4 in einer zweiten Endstellung,
- Fig. 6: ein drittes Ausführungsbeispiel einer Energieführungsvorrichtung in einer Seitenansicht und
- Fig. 7: in einer Schnittansicht den die Energieführungsvorrichtung entlang der Schnittlinie A - A, wobei die Energieführungseinheit nicht dargestellt ist.

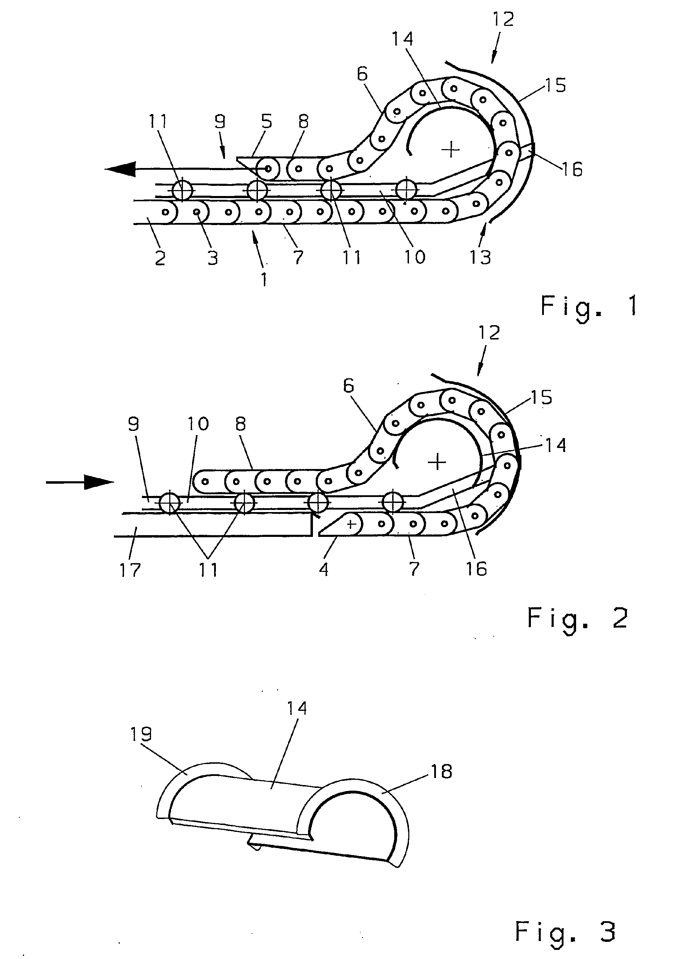

In den Figuren 1 und 2 ist ein erstes Ausführungsbeispiel einer Energieführungsvorrichtung dargestellt. Die Energieführungsvorrichtung weist eine Energieführungseinheit 1 auf. Die Energieführungseinheit 1 ist durch Glieder 2 gebildet, die gelenkig miteinander verbunden sind. Die Glieder 2 sind um im wesentlichen senkrecht zur Längsrichtung der Energieführungseinheit 1 verlaufende Achsen 3 verschwenkbar. Ein erstes Ende 4 der Energieführungseinheit 1 ist ortsfest angeordnet. Das zweite Ende 5 ist in Längsrichtung der Energieführungseinheit beweglich. Unter Ausbildung eines Krümmungsbereichs 6 weist die Energieführungseinheit 1 einen Untertrum 7 und einen Obertrum 8 auf.

Zwischen dem Obertrum 8 und dem Untertrum 7 ist ein Tragwagen 9 angeordnet. Der Tragwagen 9 weist einen Grundkörper 10 auf, der mit Rollen 11 verbunden ist, so dass die Rollen 11 auf der Oberseite des Untertrums 7 bzw. auf der Unterseite des Obertrums 8 rollen. Mit dem Grundkörper 10 ist eine Rückholeinrichtung 12 verbunden. Die Rückholeinrichtung 12 weist einen gekrümmten Führungskanal 13 auf. Der Führungskanal 13 ist so ausgebildet, dass die Energieführungseinheit 1 im Krümmungsbereich 6 geführt wird.

Der Führungskanal 13 ist durch einen ersten inneren Krümmungsabschnitt 14 und durch einen zweiten äußeren Krümmungsabschnitt 15 in radialer Richtung begrenzt. Aus der Darstellung in den Figuren 1 und 2 ist ersichtlich, dass der Mittelpunktswinkel des inneren Krümmungsabschnittes 14 größer ist als ein Mittelpunktswinkel des äußeren Krümmungsabschnittes 15. Der Mittelpunktswinkel des inneren Krümmungsabschnittes 14 ist dabei größer als 180°. Die Krümmungsabschnitte 14, 15 sind durch wenigstens eine Strebe 16 mit dem Tragwagen 9 verbunden. Die Verbindung der Krümmungsabschnitte 14, 15 kann dabei eine lösbare Verbindung sein. Die Streben 16 begrenzen den Führungskanal 13 seitlich.

Fig. 1 zeigt die Energieführungsvorrichtung in einer ersten Endstellung der Energieführungseinheit 1. Hierbei nahm das erste bewegliche Ende 5 der Energieführungseinheit 1 eine erste Endstellung ein. Wird nun das bewegliche Ende 5 in Pfeilrichtung, wie sie in der Figur 1 dargestellt ist, bewegt, so gleitet die Energieführungseinheit 1 durch den Führungskanal 13 hindurch und legt sich auf dem Tragwagen 9 ab. Der Tragwagen 9 wird durch die Energieführungseinheit 1 bewegt.

Fig. 2 zeigt eine Konstellation, in der die Energieführungsvorrichtung ihre andere Endstellung einnahm. Durch Ausübung einer Schubkraft in Pfeilrichtung nach Fig. 2 wird die Energieführungseinheit 1 auf einer Unterlage abgelegt. Aus der Fig. 2 ist ersichtlich, dass der Tragwagen 9 auf einer Führung 17 geführt wird. Die Höhe der Führung 17 ist so bemessen, dass der Tragwagen 9 stets in eine Ebene läuft.

In der Fig. 3 ist eine Ausgestaltung eines äußeren Krümmungsabschnittes 15 dargestellt. Der äußere Krümmungsabschnitt 15 weist Randbereiche 18, 19 auf, die zur seitlichen Begrenzung der Bewegung der Energieführungseinheit dienen.

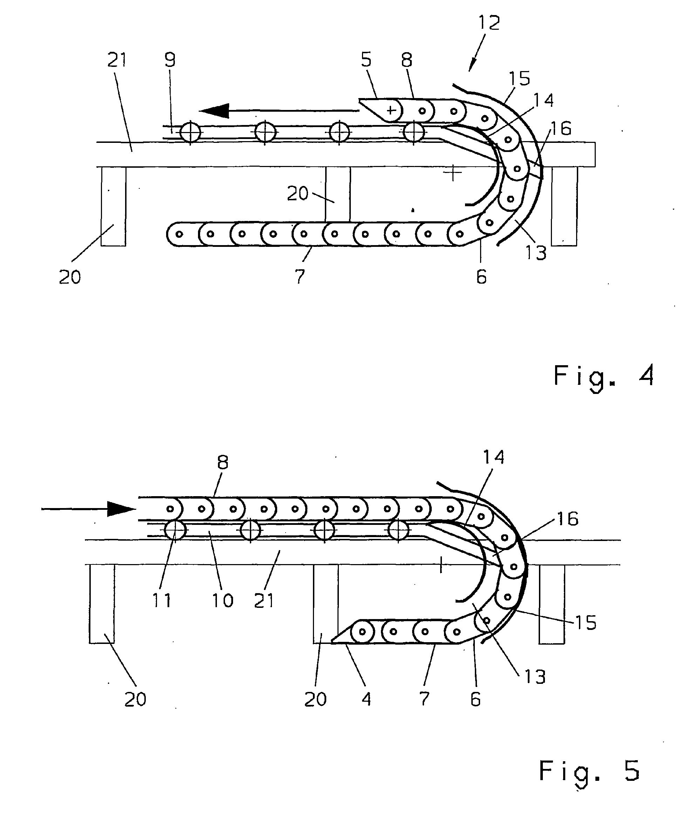

Fig. 4 und 5 zeigen eine zweite Ausführungsform einer Energieführungsvorrichtung. Der grundsätzliche Aufbau des Tragwagens 9 mit der Rückholeinrichtung 12 sowie der Energieführungseinheit 1 entspricht der Ausgestaltung, wie sie in den Figuren 1 und 2 dargestellt und vorstehend beschrieben ist. Die Energieführungsvorrichtung weist ein Gestell auf, auf dem der Tragwagen 9 hin- und her bewegbar ist. Hierzu ist ein im wesentlichen horizontal verlaufender Träger 21 vorgesehen, der auf Stelzen 20 angeordnet ist.

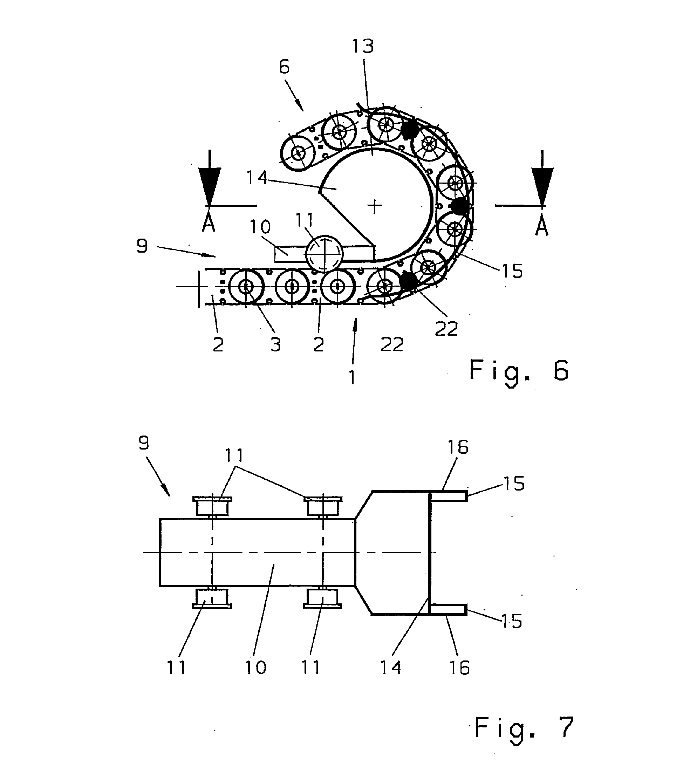

Fig. 6 und 7 zeigen eine noch weitere Ausführungsform einer Energieführungsvorrichtung. Die Energieführungsvorrichtung weist eine aus Gliedern 2 zusammengesetzte Energieführungseinheit auf. Die Glieder sind gelenkig miteinander verbunden. Sie sind um im wesentlichen senkrecht zur Längsrichtung der Energieführungseinheit 1 verlaufende Achsen 3 verschwenkbar. In dem dargestellten Ausführungsbeispiel sind an einigen Gliedern 3 Rollen 22 vorgesehen. Die Rollen 22 sind an den Außenseiten der Laschen der Glieder 2 angeordnet. Sie sind dabei so angeordnet, dass sie auf dem äußeren Krümmungsabschnitt 15 abrollen. Dies ist nicht zwingend notwendig. Es besteht auch die Möglichkeit, dass die Rollen 22 auf dem inneren Krümmungsabschnitt 14 der Rückholeinrichtung 12 abrollen. Durch diese Ausgestaltung der Energieführungsvorrichtung wird erreicht, dass die Reibung zwischen der Rückholeinrichtung und der Energieführungseinheit 1 vermindert wird.

Aus der Draufsicht auf den Tragwagen 9 nach Fig. 7 ist ersichtlich, dass ein innerer Krümmungsabschnitt 14 vorgesehen ist. Es sind zwei beabstandet zueinander angeordnete äußere Krümmungsabschnitte 15 vorgesehen, so dass die Energieführungseinheit 1 zwischen den äußeren Krümmungsabschnitten 15 geführt wird. Die äußeren Krümmungsabschnitte 15 sind über Streben 16 mit dem Tragwagen verbunden.

Der innere Krümmungsabschnitt 14, der äußere Krümmungsabschnitt 15 können lösbar mit dem Grundkörper 10 des Tragwagens verbunden sein, so dass der Grundkörper 10 mit unterschiedlich ausgebildeten Krümmungsabschnitten versehen sein kann, so dass der Tragwagen für unterschiedliche Energieführungseinheiten eingesetzt werden kann.

Durch die erfindungsgemäße Ausgestaltung des Tragwagens sowie der Energieführungsvorrichtung wird eine zuverlässige und sichere Führung der Energieführungseinheit erreicht. Darüber hinaus werden die auf die Energieführungseinheit wirkenden Kräfte effektiv reduziert.

### Bezugszeichenliste

- 1: Energieführungseinheit
- 2: Glied
- 3: Achse
- 4: erstes Ende
- 5: zweites Ende
- 6: Krümmungsbereich
- 7: Untertrum
- 8: Obertrum
- 9: Tragwagen
- 10: Grundkörper
- 11: Rolle
- 12: Rückholeinrichtung
- 13: Führungskanal
- 14: innerer Krümmungsabschnitt
- 15: äußerer Krümmungsabschnitt
- 16: Strebe
- 17: Führung
- 18: Randbereich
- 19: Randbereich
- 20: Stelze
- 21: Träger
- 22: Rolle

## Patentansprüche

1. Tragwagen für eine Energieführungseinheit, der zwischen einen Obertrum und einen Untertrum der Energieführungseinheit anordenbar und mit dieser beweglich ist, wobei dieser einen Grundkörper (10) aufweist mit dem eine Rückholeinrichtung (12) verbunden ist, **dadurch gekennzeichnet, dass** die Rückholeinrichtung (12) wenigstens teilweise durch mindestens einen gekrümmten Führungskanal (13) gebildet ist, der durch mindestens einen inneren und durch mindestens einen äußeren, zueinander beabstandete Krümmungsabschnitt (14, 15) gebildet ist.

2. Tragwagen nach Anspruch 1, **dadurch gekennzeichnet, dass** zwei Führungskanäle (13) vorgesehen sind, wobei jeder Führungskanal (13) einen inneren und mindestens einen äußeren Krümmungsabschnitt (14, 15) aufweist.

3. Tragwagen nach Anspruch 1 oder 2, **dadurch gekennzeichnet, dass** ein Mittelpunktswinkel des inneren Krümmungsabschnittes (14) größer ist als ein Mittelpunktswinkel des äußeren Krümmungsabschnittes (15).

4. Tragwagen nach Anspruch 3, **dadurch gekennzeichnet, dass** der Mittelpunktswinkel des inneren Krümmungsabschnittes (14) größer 180° ist.

5. Tragwagen nach einem oder mehreren vorhergehenden Ansprüchen 1 bis 4, **dadurch gekennzeichnet, dass** der mindestens eine Führungskanal (13) wenigstens teilweise für Gleitreibung ausgebildet ist.

6. Tragwagen nach Anspruch 5, **dadurch gekennzeichnet, dass** der mindestens eine Führungskanal (13) wenigstens einen Abschnitt aufweist, der mit einer Gleitschicht versehen ist.

7. Tragwagen nach Anspruch 6, **dadurch gekennzeichnet, dass** die Gleitschicht durch eine Einlage gebildet ist.

8. Tragwagen nach einem oder mehreren vorhergehenden Ansprüchen 1 bis 7, **dadurch gekennzeichnet, dass** der innere und/oder der äußere Krümmungsabschnitt (14, 15) wenigstens teilweise aus Metall gebildet ist.

9. Tragwagen nach Anspruch 8, **dadurch gekennzeichnet, dass** der innere und/oder der äußere Krümmungsabschnitt (14, 15) aus einem Blech gebildet ist.

10. Energieführungsvorrichtung, umfassend wenigstens eine aus Gliedern (2) zusammengesetzte Energieführungseinheit (1), die untereinander um senkrechte Achsen (3) zur Längsrichtung der Energieführungseinheit (1) angelenkt sind, wobei ein erstes Ende (4) der Energieführungseinheit (1) ortsfest befestigbar und das zweite Ende (5) wenigstens in Längsrichtung bewegbar sind, und ein Obertrum (8) sowie einen Untertrum (7) aufweist, zwischen denen wenigstens ein in Längsrichtung der Energieführungseinheit (1) hin und her beweglicher Tragwagen (9) angeordnet ist, wobei dieser einen Grundkörper (10) aufweist mit dem eine Rückholeinrichtung (12) verbunden ist, **dadurch gekennzeichnet, dass** die Rückholeinrichtung (12) wenigstens teilweise durch mindestens einen gekrümmten Führungskanal (14, 15) gebildet ist, der durch mindestens einen inneren und durch mindestens einen äußeren, zueinander beabstandete Krümmungsabschnitt (14, 15) gebildet ist, so dass die Energieführungseinheit (1) im Krümmungsbereich (6) geführt wird.

11. Energieführungsvorrichtung nach Anspruch 10, wobei der Tragwagen nach einem oder mehreren Ansprüchen 2 bis 9 ausgebildet ist.

12. Energieführungsvorrichtung nach Anspruch 10 oder 11, **dadurch gekennzeichnet, dass** wenigstens einige Glieder (2) der Energieführungseinheit (1) Mittel aufweisen, die in wenigstens einen Führungskanal eingreifen.

13. Energieführungsvorrichtung nach Anspruch 12, **dadurch gekennzeichnet, dass** die Mittel kettenauswärts gerichtete Vorsprünge umfassen.

14. Energieführungsvorrichtung nach Anspruch 12, **dadurch gekennzeichnet, dass** die Mittel durch Rollen (22) gebildet sind.

## Claims

1. Supporting carriage for a power conducting unit, which can be arranged between an upper section and a lower section of the power conducting unit and can move therewith, with said supporting carriage having a base body (10) to which a return device (12) is connected, **characterized in that** the return device (12) is formed at least partially by at least one curved guide channel (13), which is formed by at least one inner and by at least one outer curved section (14, 15), which are at a distance from one another.

2. Supporting carriage according to Claim 1, **characterized in that** two guide channels (13) are provided, with each guide channel (13) having an inner and at least one outer curved section (14, 15).

3. Supporting carriage according to Claim 1 or 2, **characterized in that** a centre-point angle of the inner curved section (14) is greater than a centre-point angle of the outer curved section (15).

4. Supporting carriage according to Claim 3, **characterized in that** the centre-point angle of the inner curved section (14) is greater than 180°.

5. Supporting carriage according to one or more of the preceding Claims 1 to 4, **characterized in that** the at least one guide channel (13) is designed at least partially for sliding friction.

6. Supporting carriage according to Claim 5, **characterized in that** the at least one guide channel (13) has at least one section which is provided with a sliding layer.

7. Supporting carriage according to Claim 6, **characterized in that** the sliding layer is formed by an insert.

8. Supporting carriage according to one or more of the preceding Claims 1 to 7, **characterized in that** the inner and/or the outer curved section (14, 15) are/is formed at least partially from metal.

9. Supporting carriage according to Claim 8, **characterized in that** the inner and/or the outer curved section (14, 15) are/is formed from a metal sheet.

10. Power conducting device, comprising at least one power conducting unit (1) which is composed of links (2) which are articulated to one another about vertical axes (3) with respect to the longitudinal direction of the power conducting unit (1), in which case a first end (4) of the power conducting unit (1) can be attached in a fixed position, and the second end (5) can be moved at least in the longitudinal direction, and has an upper section (8) and a lower section (7), between which at least one supporting carriage (9) is arranged which can move to and fro in the longitudinal direction of the power conducting unit (1), with the supporting carriage (9) having a base body (10) to which a return device (12) is connected, **characterized in that** the return device (12) is formed at least partially by at least one curved guide channel (14, 15), which is formed by at least one inner and by at least one outer curved section (14, 15), which are at a distance from one another, such that the power conducting unit (1) is guided in the curved area (6).

11. Power conducting device according to Claim 10, with the supporting carriage being designed according to one or more of Claims 2 to 9.

12. Power conducting device according to Claim 10 or 11, **characterized in that** at least some of the links (2) of the power conducting unit (1) have means which engage in at least one guide channel.

13. Power conducting device according to Claim 12, **characterized in that** the means comprise projections which are directed outwards from the chain.

14. Power conducting device according to Claim 12, **characterized in that** the means are formed by rollers (22).

## Revendications

1. Chariot porteur pour unité de guidage d'énergie, qui peut être disposé entre un tronçon supérieur et un tronçon inférieur de l'unité de guidage d'énergie, et qui peut être déplacé avec celle-ci, celui-ci présentant un corps de base (10) auquel est raccordé un dispositif de rappel (12), **caractérisé en ce que** le dispositif de rappel (12) est formé au moins en partie par au moins un canal de guidage courbe (13), qui est formé par au moins une portion de courbure intérieure et par au moins une portion de courbure extérieure, qui sont espacées l'une de l'autre (14, 15).

2. Chariot porteur selon la revendication 1, **caractérisé en ce que** deux canaux de guidage (13) sont prévus, chaque canal de guidage (13) présentant une portion de courbure intérieure et au moins une portion de courbure extérieure (14, 15).

3. Chariot porteur selon la revendication 1 ou 2, **caractérisé en ce qu'**un angle au centre de la portion de courbure intérieure (14) est supérieur à un angle au centre de la portion de courbure extérieure (15).

4. Chariot porteur selon la revendication 3, **caractérisé en ce que** l'angle au centre de la portion de courbure intérieure (14) est supérieur à 180°.

5. Chariot porteur selon l'une quelconque ou plusieurs des revendications précédentes 1 à 4, **caractérisé en ce que** l'au moins un canal de guidage (13) est réalisé au moins en partie pour un frottement de glissement.

6. Chariot porteur selon la revendication 5, **caractérisé en ce que** l'au moins un canal de guidage (13) présente au moins une portion qui est pourvue d'une couche de glissement.

7. Chariot porteur selon la revendication 6, **caractérisé en ce que** la couche de glissement est formée par un insert.

8. Chariot porteur selon l'une quelconque ou plusieurs des revendications précédentes 1 à 7, **caractérisé en ce que** la portion de courbure intérieure et/ou extérieure (14, 15) est formée au moins en partie en métal.

9. Chariot porteur selon la revendication 8, **caractérisé en ce que** la portion de courbure intérieure et/ou extérieure (14, 15) est formé d'une tôle.

10. Dispositif de guidage d'énergie, comprenant au moins une unité de guidage d'énergie (1) constituée d'éléments (2), qui sont articulés les uns aux autres autour d'axes (3) perpendiculaires à la direction longitudinale de l'unité de guidage d'énergie (1), une première extrémité (4) de l'unité de guidage d'énergie (1) pouvant être fixée en position et la deuxième extrémité (5) pouvant être déplacée au moins dans la direction longitudinale, et présentant un tronçon supérieur (8) ainsi qu'un tronçon inférieur (7), entre lesquels est disposé au moins un chariot porteur (9) déplaçable suivant un mouvement de va et vient dans la direction longitudinale de l'unité de guidage d'énergie (1), celui-ci présentant un corps de base (10) auquel est raccordé un dispositif de rappel (12), **caractérisé en ce que** le dispositif de rappel (12) est formé au moins en partie par au moins un canal de guidage courbe (13), qui est formé par au moins une portion de courbure intérieure et par au moins une portion de courbure extérieure, qui sont espacées l'une de l'autre (14, 15), de sorte que l'unité de guidage d'énergie (1) soit guidée dans la région de la courbure (6).

11. Dispositif de guidage d'énergie selon la revendication 10, dans lequel le chariot porteur est réalisé selon l'une quelconque ou plusieurs des revendications 2 à 9.

12. Dispositif de guidage d'énergie selon la revendication 10 ou 11, **caractérisé en ce qu'**au moins quelques éléments (2) de l'unité de guidage d'énergie (1) présentent des moyens qui viennent en prise dans au moins un canal de guidage.

13. Dispositif de guidage d'énergie selon la revendication 12, **caractérisé en ce que** les moyens comprennent des saillies orientées vers l'extérieur de la chaîne.

14. Dispositif de guidage d'énergie selon la revendication 12, **caractérisé en ce que** les moyens sont formés par des rouleaux (22).
